# EUROPEAN PATENT APPLICATION

(11) **EP 3 660 690 A1**
(43) Date of publication of application: **03.06.2020**
(21) Application number: 17933857.9
(22) Date of filing: 30.11.2017
(51) Int. Cl.: G06F 13/38

(54) **CALCULATION UNIT, CALCULATION SYSTEM AND CONTROL METHOD FOR CALCULATION UNIT**

(71) Applicant: SZ DJI Technology Co., Ltd., Shenzhen, Guangdong 518057 (CN)
(72) Inventor: LI, Peng, Shenzhen Guangdong 518057 (CN); HAN, Feng, Shenzhen Guangdong 518057 (CN); YANG, Kang, Shenzhen Guangdong 518057 (CN)
(74) Representative: Appelt, Christian W.
(86) International application number: PCT/CN2017/113935
(87) International publication number: WO 2019/104639

(57) **Abstract**

A calculation unit, a calculation system and a control method for calculation unit are provided. The calculation unit includes a data interface; a data storage module configured to store target data received by the data interface; a first configuration interface configured to receive channel information, where the channel information is used to indicate a quantity of channels included in the data interface; and an operation control module configured to perform following operations: determining that the data interface includes M channels according to the channel information; obtaining the target data from the data storage module, where the target data includes sub-data corresponding to each channel in the M channels, and performing a data operation according to the sub-data corresponding to each channel in the M channels. The above technical solution performs a multi-channel operation according to the indication of the channel information, and does not solely perform a single-channel operation as an existing calculation unit, thereby improving the flexibility of the data calculation method.

## Description

### COPYRIGHT NOTICE

The content disclosed in this patent document contains material which is subject to copyright protection. The copyright is owned by the copyright owner. The copyright owner has no objection to the facsimile reproduction by anyone of the patent document or the patent disclosure, as it appears in the Patent and Trademark Office patent file or records.

### TECHNICAL FIELD

The present disclosure generally relates to the field of data processing and, more particularly, relates to a calculation unit, a calculation system, and a control method for calculation unit.

### BACKGROUND

Existing calculation system (e.g., a neural networks system) often includes a data bus and a plurality of calculation units connected to the data bus.

The data bus can be used to receive to-be-calculated data inputted from an external memory. A calculation unit receives corresponding target data from the data bus and performs preset data operations based on the received target data. Taking a neural networks system as an example of the calculation system, the calculation unit is mainly used to perform a multiply-accumulate (MAC) operation on the input feature value and its corresponding weight.

The calculation unit in the existing calculation system merely supports single-channel calculation, causing the data calculation method to be inflexible.

### SUMMARY

The present disclosure provides a calculation unit, a calculation system, and a control method for calculation unit, to improve flexibility of data calculation method.

A first aspect of the present disclosure provides a calculation unit, comprising: a data interface configured to be connected to a data bus; a data storage module, configured to store target data received by the data interface; a first configuration interface configured to receive channel information, where the channel information is used to indicate a quantity of channels included in the data interface; and an operation control module configured to perform following operations: determining that the data interface includes M channels according to the channel information, where M is a positive integer greater than or equal to two; obtaining the target data from the data storage module, where the target data includes sub-data corresponding to each channel in the M channels; and performing a data operation according to the sub-data corresponding to each channel in the M channels.

A second aspect of the present disclosure provides a calculation system, comprising a plurality of calculation units, where each of the plurality of calculation units includes the calculation unit according to the first aspect; and a data bus configured to transmit data to the plurality of calculation units.

A third aspect of the present disclosure provides a control method for a calculation unit. The calculation unit includes: a data interface configured to be connected to a data bus; a data storage module, configured to store target data received by the data interface; a first configuration interface configured to receive channel information, where the channel information is used to indicate a quantity of channels included in the data interface. The control method includes: determining that the data interface includes M channels according to the channel information, where M is a positive integer greater than or equal to two; obtaining the target data from the data storage module, where the target data includes sub-data corresponding to each channel in the M channels; and performing a data operation according to the sub-data corresponding to each channel in the M channels.

By providing the first configuration interface capable of being used to receive the channel information in the calculation unit, and changing operation control logic in the calculation unit, the calculation unit controls the sub-data corresponding to each channel to perform a data operation based on the received channel information. Therefore, the calculation unit in the disclosed embodiments of the present disclosure performs a multi-channel data operation according to the indication of the channel information, and does no longer solely perform a single-channel operation as an existing calculation unit. Therefore, the calculation unit is applicable to situations that desire different data preciseness or data accuracy, or is applicable to calculation systems that desire different hardware resources, which improves the flexibility of the data calculation method.

### BRIEF DESCRIPTION OF THE DRAWINGS

Figure 1 illustrates a schematic diagram of a neural networks system;
Figure 2 illustrates a schematic structural diagram of an exemplary calculation unit consistent with disclosed embodiments of the present disclosure;
Figure 3 illustrates a schematic structural diagram of an exemplary calculation system consistent with disclosed embodiments of the present disclosure;
Figure 4 illustrates a schematic flowchart of an exemplary control method for calculation unit consistent with disclosed embodiments of the present disclosure;
Figure 5 illustrates a schematic structural diagram of another exemplary calculation unit consistent with disclosed embodiments of the present disclosure;
Figure 6 illustrates a schematic structural diagram of another exemplary calculation system consistent with disclosed embodiments of the present disclosure;
Figure 7 illustrates a schematic flowchart of another exemplary control method for calculation unit consistent with disclosed embodiments of the present disclosure;
Figure 8 illustrates a schematic diagram illustrating an exemplary data transmission manner of a data bus and an ID bus consistent with disclosed embodiments of the present disclosure;
Figure 9 illustrates a schematic structural diagram of another exemplary calculation unit consistent with disclosed embodiments of the present disclosure; and
Figure 10 illustrates a schematic structural diagram of another exemplary calculation unit consistent with disclosed embodiments of the present disclosure.

### DETAILED DESCRIPTION OF THE DISCLOSURE

The present disclosure provides a calculation unit that may be applied to various types of calculation systems. As an example, the calculation unit provided in the present disclosure may be applied to a calculation system, e.g., a neural networks system, that desires to be compatible with multiple calculation accuracy. The neural networks system described in the present disclosure may be, for example, convolution neural networks (CNN), or recurrent neural networks (RNN).

A type of a data operation that can be performed by the calculation unit may be related to an application scenario, which is not limited by the present disclosure. Taking the calculation unit applied to perform calculations corresponding to a convolution layer or a fully connected layer in the neural networks system as an example, the calculation unit may be configured to perform a multiply-accumulate (MAC) calculation in a neural networks calculation.

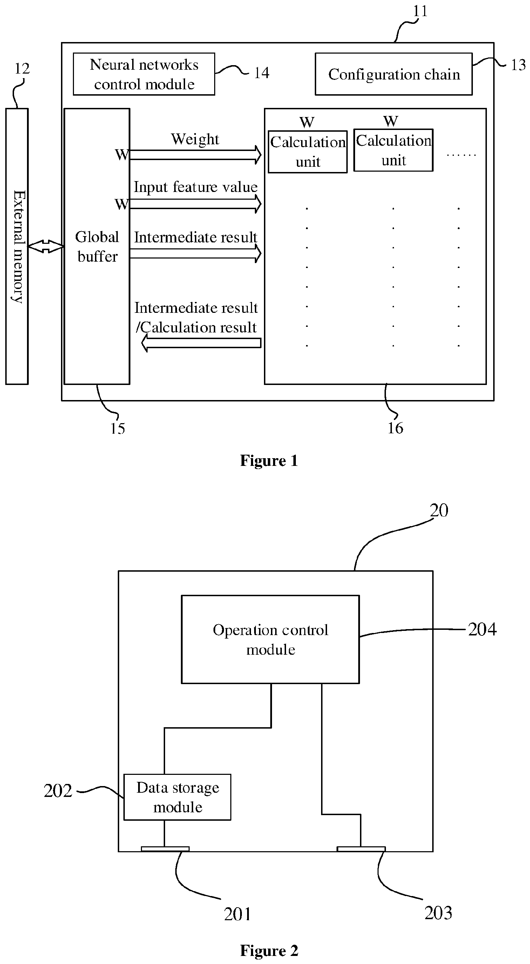

To facilitate understanding, taking the neural networks system as an example, the positions and operations of the calculation unit and the calculation system may be illustratively described below with reference to Figure 1.

Figure 1 illustrates a schematic diagram of the neural networks system. Referring to Figure 1, the neural networks system 10 includes a calculation system 11 and an external memory 12.

The calculation system 11 is a system-on-a-chip. The system-on-a-chip often has substantially small storage resource, and often desires to obtain to-be-calculated data from the external memory 12. For the neural networks calculation, common to-be-calculated data includes an input feature value and a filter weight.

The calculation system 11 can include a configuration chain (config chain) 13, a neural networks control (NN Ctrl) module 14, a global buffer 15, and a calculation array (calc array) 16.

The configuration chain 13 can be configured to receive calculation instructions configured by a central processing unit. The calculation instructions can be used, for example, to indicate which calculation units in the calculation array 16 participate in a current data operation.

The neural networks control module 14 can be configured to control a calculation process of the to-be-calculated data. For example, the neural networks control module 14 can be configured to control communication and data exchange processes between the global buffer 15 and the calculation array 16.

The global buffer 15 can be configured to buffer one or more following data: the to-be-calculated data obtained from the external memory 12, an intermediate result outputted from the calculation array 16, and a calculation result outputted from the calculation array 16.

The calculation array 16 can include a data bus (can be referred to as DATA XBUS, not illustrated in Figure 1) and a plurality of calculation units (Calc U). The calculation units can be connected through the data bus. The calculation unit can obtain the to-be-calculated data through the data bus, perform a corresponding data operation according to the to-be-calculated data, and transmit the calculation result or the intermediate result outputted from the calculation unit through the data bus.

If bit widths of both the data bus and a data interface of the calculation unit in the calculation array are W, an existing calculation unit merely supports a single-channel calculation with a bit width less than or equal to W, causing the data calculation method to be inflexible. Further, when a bit width of the to-be-calculated data is substantially small (e.g., less than or equal to W/2), more than half of data signals received by the data interface of the calculation unit each time are inactive signals, which causes waste of data transmission resource.

To solve the above issues, a calculation unit 20 consistent with disclosed embodiments of the present disclosure is described in detail below with reference to Figure 2. The calculation unit 20 may be applied to the neural networks system illustrated in Figure 1, for example, may be configured to perform data operations corresponding to the calculation unit illustrated in Figure 1.

Referring to Figure 2, the calculation unit 20 may include a data interface 201, a data storage module 202, a first configuration interface 203, and an operation control module 204.

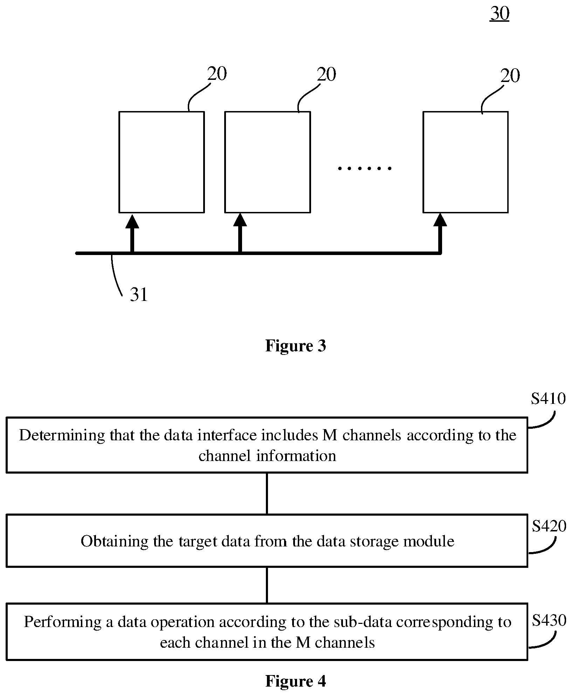

The data interface 201 may be configured to be connected to a data bus in a calculation system in which the calculation unit 20 is located. Taking Figure 3 as an example, the calculation unit 20 may be located in a calculation system 30 illustrated in Figure 3. The calculation system 30 may include a plurality of calculation units 20, and the plurality of calculation units 20 may be connected to a data bus 31 in the calculation system 30 through respective data interfaces thereof (not illustrated in Figure 3).

Referring back to Figure 2, the data storage module 202 may be configured to store target data received by the data interface 201. The data storage module 202 may be, for example, a register. In one embodiment, the data storage module 202 may be referred to as a data register (or referred to as DATA REG).

The first configuration interface 203 may be configured to receive channel information. The channel information may be configured to indicate a quantity of channels (or data transmission channels) included in the data interface 201. If N data lines are provided in the data interface 201, the data interface 201 may transmit N-bit data at one time. The N-bit data may belong to a same data block. In view of this, the data interface 201 in the calculation unit 20 may be a single-channel data interface. In other words, the N data lines in the data interface 201 may form a data transmission channel. If the N-bit data contains data in a plurality of data blocks, the data interface 201 may be a data interface that supports multi-channel data transmission. In other words, the N data lines may form a plurality of data transmission channels. Taking the data interface 201 containing 16 data lines as an example, if the 16-bit data transmitted by the data interface 201 at one time belongs to a same data block, the data interface 201 may be a single-channel data interface. If upper 8-bit data lines and lower 8-bit data lines in the 16 data lines are used to transmit different data blocks, respectively, the data interface 201 may be a dual-channel data interface.

The channel information may be, for example, configured by an external central processor according to practical applications. The channel information may be transmitted to a calculation system to which the calculation unit 20 belongs through a message or a configuration instruction, and then may be transmitted to the calculation unit 20.

The operation control module 204 may be configured to perform processes illustrated in Figure 4. The processes in Figure 4 may include steps S410 - S430. Such steps may be described in detail below.

Step S410: Determining that the data interface 201 includes M channels according to the channel information.

Further, M may be a positive integer. For example, M may be a positive integer not less than two.

Step S410 may be achieved by multiple methods. As an example, the calculation unit 20 may store the received channel information into an internal storage module, e.g., a register. The operation control module 204 may query the channel information through the storage module. As another example, the operation control module 204 may obtain the channel information in real time through the first configuration interface 203.

Step S420: Obtaining the target data from the data storage module 202.

A bit width of the target data may be equal to the bit width of the data interface 201. The target data may include sub-data corresponding to each channel in the M channels. Taking the bit width of the data interface being equal to 16 and M = 2 as an example, the upper 8-bit data lines in the data interface 201 may form one channel (hereinafter referred to as channel 1), and the lower 8-bit data lines may form another channel (hereinafter referred to as channel 2). In the 16-bit target data, 8-bit data transmitted by the upper 8-bit data lines may be sub-data corresponding to the channel 1, and 8-bit data transmitted by the lower 8-bit data lines may be sub-data corresponding to the channel 2.

The type of the target data may be related to the application scenario of the calculation unit 20, which is not limited by the disclosed embodiments of the present disclosure. For example, the calculation unit 20 may be applied to a field of big data processing, and the target data may include records or logs collected from networks. For another example, the calculation unit 20 may be applied to a field of neural networks calculation, and the target data may include an input feature value and weight used for the neural networks calculation. In certain embodiments, the target data may be a data index of the to-be-calculated data. Compared with directly transmitting the to-be-calculated data, transmitting the data index on the data bus may reduce the demands on the bandwidth of the data bus by the calculation system. Detailed descriptions may be provided below in combination with specific embodiments, which are not repeated herein.

Step S430: Performing a data operation according to the sub-data corresponding to each channel in the M channels.

By providing the first configuration interface 203 capable of being used to receive the channel information in the calculation unit 20, and changing operation control logic in the calculation unit 20, the calculation unit 20 may control the sub-data corresponding to each channel to perform a data operation based on the received channel information. Therefore, the calculation unit 20 in the disclosed embodiments of the present disclosure may perform a multi-channel data operation according to the indication of the channel information, and may no longer solely perform a single-channel operation as an existing calculation unit. Therefore, the calculation unit 20 may be applicable to situations that desire different data preciseness or data accuracy, or may be applicable to calculation systems that desire different hardware resources, which may improve the flexibility of the data calculation method.

For example, when the bit width of the to-be-calculated data is equal to the bit width W of the data interface 201, the calculation unit 20 may be instructed to perform a single-channel operation through the channel information. When the bit width of the to-be-calculated data is less than or equal to W/2, the calculation unit 20 may be instructed to perform a dual-channel operation through the channel information. In certain embodiments, the calculation unit 20 may be instructed to perform data operations with 4 channels, 8 channels, or even more channels according to practical applications. A quantity of channels in the data interface 201 may be different, and the bit width of the sub-data corresponding to each channel may be different accordingly. Because the operation control module 204 performs a data operation based on the sub-data corresponding to each channel, different bit width of the sub-data of each channel may indicate that the accuracy of the data on which the data operation is based may be different. Therefore, the calculation unit 20 in the disclosed embodiments of the present disclosure may be used for data calculations compatible with multiple precisions, which may enable the application scenario of the calculation unit 20 to be substantially flexible. Further, the data calculation supporting multiple precisions may avoid the issue of waste of data transmission resource caused by the single-channel calculation to a certain extent.

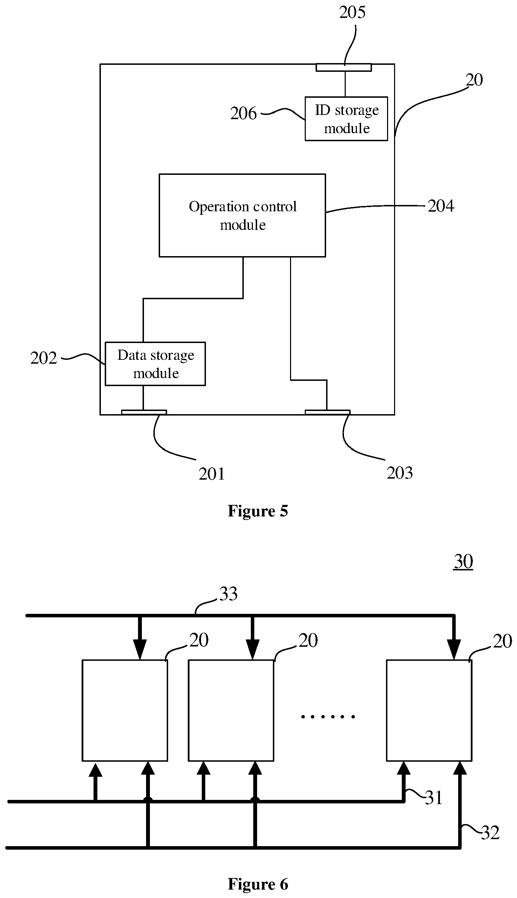

Step S420 may be achieved by multiple methods. As an example, the calculation unit 20 may receive the target data from the data bus under the control of an external control unit. For example, when the data transmitted on the data bus contains target data that desires to be processed by the calculation unit 20, the external control unit may control the calculation unit 20 to enter an operating state to receive the target data from the data bus. As another example, the calculation system to which the calculation unit 20 belongs may include an ID bus (or ID XBUS), and the calculation unit 20 may receive the target data from the data bus according to the data ID transmitted on the ID bus. The method for obtaining the target data based on the ID bus may be described in detail below with references to Figures 5-6.

Referring to Figure 5, the calculation unit 20 may further include a second configuration interface 205 (also referred to as ID configuration interface) and an ID storage module 206.

Referring to Figure 6, the calculation system 30 may further include an ID bus 32 and an ID configuration bus 33. The second configuration interface 205 may be configured to be connected to the ID configuration bus 33 to receive the data ID of the target data. The second configuration interface 205 of the calculation unit 20 may be connected to the ID configuration bus 33. The ID configuration bus 33 may also be referred to as ID CONFIG BUS. The ID configuration bus 33 may configure data ID of the to-be-calculated target data for each calculation unit 20 in the calculation system 30. The data ID of the target data corresponding to each calculation unit 20 in the calculation system 30 may be flexibly configured by, for example, an external central processor according to practical applications, and may be issued to each calculation unit 20 through the ID configuration bus 33.

The ID storage module 206 may be configured to store the data ID of the target data, i.e., the data ID received from the second configuration interface 205. The ID storage module 206 may be achieved by, for example, a register. In such implementation manner, the ID storage module 206 may be referred to as ID register (or referred to as ID REG).

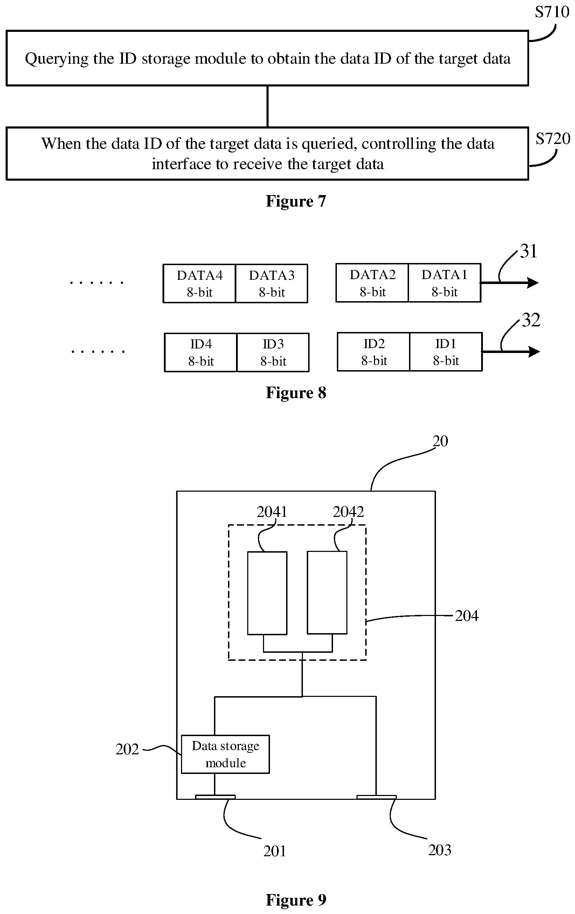

Based on the implementation manner illustrated in Figure 5 and Figure 6, the operation control module 204 in the calculation unit 20 may be further configured to perform steps S710-S720 illustrated in Figure 7.

Step S710: Querying the ID storage module 206 to obtain the data ID of the target data.

Step S720: When the data ID of the target data is queried, controlling the data interface 201 to receive the target data.

Taking the bit width of the data interface 201 being equal to 16 as an example, the bit width of the to-be-calculated data may be 8. A central processor outside the calculation unit 20 may send the channel information to the calculation unit 20 through the first configuration interface 203 to configure the quantity of channels included in the data interface 201 as two, such that the calculation unit 20 may perform a dual-channel data operation. Further, the central processor outside the calculation unit 20 may configure the data ID of the target data desired to be calculated by the calculation unit 20 through the second configuration interface 205, such that the calculation unit 20 may stores the data ID of the target data into the ID storage module 206. Because the calculation unit 20 performs a dual-channel operation, the data ID of the target data may include two data ID. Figure 8 illustrates an example where data and data ID may be transmitted on the data bus 31 and on the ID bus 32 illustrated in Figure 6, respectively. Referring to Figure 8, on the data bus 31, each 16-bit data may be divided into two 8-bit data. Correspondingly, on the ID bus 32, each 16-bit data ID may be divided into two 8-bit data ID. The data on the data bus 31 and the data ID on the ID bus 32 may be transmitted synchronously. According to the data ID transmitted on the ID bus 32, the operation control module 204 in the calculation unit 20 may receive the target data matched with the data ID stored in the ID storage module 206 from the data bus 31.

The detailed structure of the operation control module 204 and the type of data operations performed by the operation control module 204 may be related to the application scenario of the calculation unit 20, which is not limited by the disclosed embodiments of the present disclosure.

Taking M channels including a first channel and a second channel as an example, referring to Figure 9, the operation control module 204 may include a first operation module 2041 and a second operation module 2042. Accordingly, the step S430 described above may include performing a data operation by the first operation module 2041 according to the sub-data corresponding to the first channel; and performing another data operation by the second operation module 2042 according to the sub-data corresponding to the second channel.

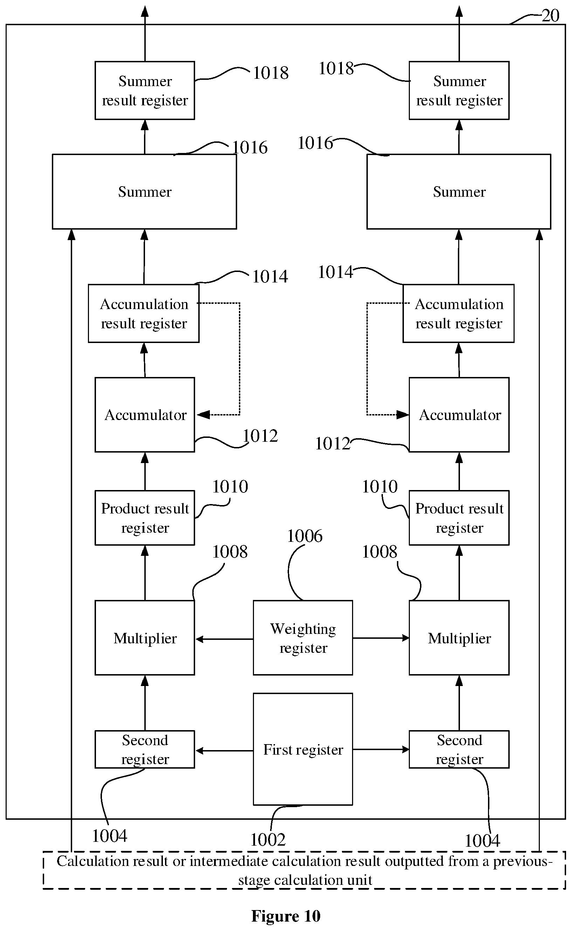

Taking a neural networks system as an example, the target data received by the calculation unit 20 may often be referred to as an input feature (IF) value and a filter weight. The neural networks system may desire to perform a multiply-accumulate (MAC) operation based on the input feature value and the weight. Taking the calculation unit 20 applied to the neural networks system as an example, the structure of the operation control module 204 and the data operation processes may be illustratively described in detail with reference to Figure 10.

Referring to Figure 10, the calculation unit 20 may include a first register 1002 of the input feature value, a second register 1004 of the input feature value, a weight register 1006, a multiplier 1008, a product result register 1010, an accumulator 1012, an accumulation result register 1014, a summer 1016 and a summer result register 1018. The first register 1002, the second register 1004, and the weight register 1006 may correspond to the above-described data storage module 202. In other words, the above-described data storage module may be specifically achieved as the first register 1002, the second register 1004, and the weight register 1006. The multiplier 1008, the accumulator 1012, and the summer 1016 located on a left side of Figure 10 may correspond to the above-described first operation module 2041. In other words, the above-described first operation module 2041 may be specifically achieved as the multiplier 1008, the accumulator 1012, and the summer 1016 located on the left side of Figure 10. The multiplier 1008, the accumulator 1012, and the summer 1016 located on a right side of Figure 10 may correspond to the above-described second operation module 2042. In other words, the above-described second operation module 2042 may be specifically achieved as the multiplier 1008, the accumulator 1012, and the summer 1016 located on the right side of Figure 10. The function of each device in Figure 10 may be described in detail below.

The first register 1002 of the input feature value may be referred to as IF DATA REG. The first register 1002 may be equivalent to a buffer, and may be configured to buffer the input feature value received from the data interface of the calculation unit 20.

The second register 1004 of the input feature value may be referred to as IF Register. The second register 1004 may be configured to store current to-be-calculated data. The current data may be selected from data buffered in the first register 1002. For example, an earliest data stored in the first register 1002 may be selected as the current data from the data buffered in the first register 1002 in a first-in-first-out manner.

The weight register 1006 may be referred to as weight DATA REG. The weight register 1006 may be configured to buffer the filter weight used in the neural networks calculation. Taking a convolution operation as an example, the filter weight may represent a convolution kernel of the convolution operation.

The multiplier 1008 may be, for example, a multiplication circuitry. The multiplier 1008 may be configured to calculate a product of the input feature value and the filter weight.

The product result register 1010 may be referred to as Product Register. The product result register 1010 may be configured to store a calculation result of the multiplier 1008, i.e., the product of the input feature value and the filter weight.

The accumulator 1012 may be, for example, an accumulator circuitry. The accumulator 1012 may be configured to calculate an accumulated value of the product of the input feature value and the filter weight.

The accumulation result register 1014 may be referred to as Accumulate Register. The accumulation result register 1014 may be configured to store a calculation result of the accumulator 1012, i.e., the accumulated value of the product of the input feature value and the filter weight.

The summer 1016 may be, for example, a summation circuitry. The summer 1016 may be configured to sum the accumulated value of the product of the input feature value and the filter weight and the calculation result or the intermediate calculation result outputted from a previous-stage calculation unit (as illustrated by a dashed line in Figure 10).

The summation result register 1018 may be referred to as Sum Register. The summation result register 1018 may be configured to store the calculation result of the summer 1016, i.e., the sum the accumulated value of the product of the input feature value and the filter weight and the calculation result or the intermediate calculation result outputted from the previous-stage calculation unit.

The type of data transmitted on the data bus may not be limited by the disclosed embodiments of the present disclosure. Optionally, in some embodiments, the to-be-calculated data may be transmitted directly on the data bus. In the disclosed embodiments, the sub-data corresponding to each channel in the M channels of the data interface may be to-be-calculated data, and may be directly used for subsequent data operations.

In some cases, a quantity of valid values of the to-be-calculated data with a bit width of W may be less than 2^{w}. Taking W = 16 as an example, the quantity of valid values of the to-be-calculated data with a bit width of 16 may be less than or equal to 2⁸. To reduce the demands on bandwidth of the data bus for data calculation process, optionally, in some embodiments, a method of transmitting the data index of the to-be-calculated data on the data bus may be instead of a method of directly transmitting the to-be-calculated data on the data bus. A data amount of the data index of the to-be-calculated data may be smaller than a data amount of the to-be-calculated data, such that the data bandwidth of the data bus may be saved. The embodiments may be described in detail below.

The data index of the to-be-calculated data may be transmitted on the data bus. Therefore, the sub-data corresponding to each channel in the M channels described in step S430 may be the data index of the to-be-calculated data. Step S430 may be specifically achieved as follows. According to the data index of the to-be-calculated data corresponding to each channel in the M channels, the to-be-calculated data corresponding to each channel may be determined through a pre-stored mapping information between data index and data (e.g., a pre-stored mapping table). A data operation may be performed on the to-be-calculated data corresponding to each channel.

The disclosed embodiments of the present disclosure may use data index to access the data, which may reduce demands on bandwidth and increase the calculation performance of the system. Still taking W = 16 and the quantity of valid values of the to-be-calculated data being less than or equal to 2⁸ as an example, an 8-bit data index may be configured to index a 16-bit to-be-calculated data. In view of this, the demands on data bandwidth of the data calculation process may be halved, and the vacated data bandwidth may be configured to transmit a substantially large amount of data indexes, thereby increasing the performance of the calculation system as a whole.

The calculation unit 20 for calculation of a fully connected (FC) layer in neural networks may be used as an example below. For the calculation of each node of the fully connected layer, the input may be the weight of entire nodes in a previous layer. Thus, the fully connected layer may have a substantially great demands on weight. Therefore, in a case where the bandwidth of the data bus is a constant, when the to-be-calculated data is directly transmitted on the data bus, the transmission capacity of the data bus may often be difficult to meet the demands of the calculation array in which the calculation unit 20 is located for the to-be-calculated data. Therefore, many calculation units in the calculation array may be in an idle state, and a quantity of calculation units that are actually working at a same time may be substantially small, which may cause a low calculation efficiency of the fully connected layer. In the disclosed embodiments of the present disclosure, the data bus may transmit the data index instead of transmitting the to-be-calculated data. In view of this, the data operation of the fully connected layer may reduce the demands on the bandwidth of the data bus, thereby improving the calculation efficiency of the fully connected layer.

The disclosed embodiments of the present disclosure also provide a calculation system 30 as illustrated in Figure 3 or Figure 6. The calculation system 30 may be applied to any calculation device that desires to be compatible with multi-precision data calculation. As an example, the calculation system 30 may be applied to an intellectual property (IP) core and a cooperative working circuit between the IP cores. For example, the calculation system 30 may be applied to the neural networks calculation. Further, in some embodiments, the calculation system 30 may be configured to perform calculations corresponding to a convolution layer or a fully connected layer in neural networks.

The disclosed embodiments of the present disclosure also provide a control method for calculation unit. The calculation unit may be, for example, the calculation unit 20 described in any one of the above-disclosed embodiments. The control method may be performed by the operation control module in the calculation unit. The control method may include a processing flow as illustrated in above-described Figure 4 or Figure 7. To avoid repetition, details are not described herein.

The above-disclosed embodiments may be achieved in whole or in part by software, hardware, firmware, or any other combination. When being achieved by software, the above-disclosed embodiments may be achieved in whole or in part in a form of a computer program product. The computer program product may include one or more computer instructions. When loading and performing the computer program instructions on a computer, the processes or functions according to the disclosed embodiments of the present disclosure may be generated in whole or in part. The computer may be a general-purpose computer, a special-purpose computer, computer networks, or any other suitable programmable device. The computer instructions may be stored in a computer-readable storage medium, or may be transmitted from a computer-readable storage medium to another computer-readable storage medium. For example, the computer instructions may be transmitted from a web site, a computer, a server, or a data center to another web site, another computer, another server or another data center through a wired (e.g., coaxial cable, optical fiber, digital subscriber line (DSL)) or a wireless (e.g., infrared, wireless, microwave, etc.) manner. The computer-readable storage medium may be any available medium that can be accessed by a computer, or may be a data storage device, e.g., a server that includes one or more available integrated media, or a data center, etc. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

Those of ordinary skill in the art may realize that the units and algorithm steps of each example described in the embodiments disclosed herein may be achieved by an electronic hardware, or a combination of a computer software and an electronic hardware. Whether such functions are performed by hardware or software depends on the specific application and design constraints of the technical solution. A professional technician may use different methods to achieve the described functions for each specific application, but such implementation should not be considered to be beyond the scope of the present disclosure.

In several embodiments provided in the present disclosure, it should be understood that the disclosed systems, devices, and methods may be achieved in any other suitable manner. For example, the above-described device embodiments are merely schematic. For example, the division of the unit may be merely a logical function division, and may have any other suitable division manner in actual implementation. For example, a plurality of units or modules may be combined or may be integrated into another system. Alternatively, some features may be ignored or may not be performed. In addition, the illustrated or discussed coupling or direct coupling or communication connection may be achieved through some interfaces, and indirect coupling or communication connection between devices or units may be electrical, mechanical or any other suitable form.

The units described as separate modules may or may not be physically separated. The modules displayed as units may or may not be physical units, i.e., may be located in a same place, or may be distributed on a plurality of network units. Some or entire units may be selected according to practical applications to achieve the purpose of scheme of the disclosed embodiments.

In addition, each functional unit in each embodiment of the present disclosure may be integrated into one processing unit. Alternatively, each unit may be separately physically provided. Alternatively, two or more units may be integrated into one unit.

The above detailed descriptions are merely exemplary embodiments of the present disclosure, and are not intended to limit the scope of the present disclosure. Any equivalent or modification thereof within the technical scope disclosed in the present disclosure and easily thought by those skilled in the art shall be covered by the scope of the present disclosure. Therefore, the scope of the present disclosure shall be subject to the scope of the claims.

## Claims

1. A calculation unit, comprising:
a data interface, configured to be connected to a data bus;
a data storage module, configured to store target data received by the data interface;
a first configuration interface, configured to receive channel information, wherein the channel information is used to indicate a quantity of channels included in the data interface; and
an operation control module, configured to perform following operations:
determining that the data interface includes M channels according to the channel information, wherein M is a positive integer greater than or equal to two,
obtaining the target data from the data storage module, wherein the target data includes sub-data corresponding to each channel in the M channels, and
performing a data operation according to the sub-data corresponding to each channel in the M channels.

2. The calculation unit according to claim 1, wherein:
the sub-data corresponding to each channel in the M channels is a data index of the to-be-calculated data corresponding to each channel, and a data amount of the data index of the to-be-calculated data is smaller than a data amount of the to-be-calculated data; and
performing the data operation according to the sub-data corresponding to each channel in the M channels includes:
according to the data index of the to-be-calculated data corresponding to each channel in the M channels, determining the to-be-calculated data corresponding to each channel through a pre-stored mapping information between data index and data, and
performing the data operation on the to-be-calculated data corresponding to each channel.

3. The calculation unit according to claim 1, wherein:
the sub-data corresponding to each channel is the to-be-calculated data corresponding to each channel.

4. The calculation unit according to any one of claims 1-3, wherein:
the M channels include a first channel and a second channel, and the operation control module includes a first operation module and a second operation module; and
performing the data operation according to the sub-data corresponding to each channel in the M channels includes:
according to the sub-data corresponding to the first channel, performing a data operation by the first operation module, and
according to the sub-data corresponding to the second channel, performing another data operation by the second operation module.

5. The calculation unit according to any one of claims 1-4, wherein the calculation unit further includes:
a second configuration interface, configured to be connected to an ID configuration bus to receive data ID of the target data; and
an ID storage module, configured to store the data ID of the target data, wherein the operation control module is further configured to perform following operations:
querying the ID storage module to obtain the data ID of the target data, and
when the data ID of the target data is queried, controlling the data interface to receive the target data.

6. The calculation unit according to any one of claims 1-5, wherein:
the target data includes an input feature value and a weight used for a neural networks calculation, and
the operation control module is configured to perform a multiply-accumulate operation on the input feature value and the weight.

7. A calculation system, comprising:
a plurality of calculation units, wherein each of the plurality of calculation units includes the calculation unit according to any one of claims 1-6; and
a data bus, configured to transmit data to the plurality of calculation units.

8. The calculation system according to claim 7, wherein the calculation system further includes:
an ID configuration bus, configured to receive ID configuration information, wherein the ID configuration information is used to indicate a data ID of a target data corresponding to a respective calculation unit of the plurality of calculation units; and
an ID bus, configured to transmit data ID corresponding to the data on the data bus.

9. The calculation system according to claims 7 or 8, wherein:
the calculation system is applied to a neural networks calculation, and
the calculation system is configured to perform a calculation corresponding to a convolution layer or a fully connected layer in neural networks.

10. A control method for a calculation unit, wherein the calculation unit includes:
a data interface, configured to be connected to a data bus;
a data storage module, configured to store target data received by the data interface;
a first configuration interface, configured to receive channel information, wherein the channel information is used to indicate a quantity of channels included in the data interface; and
the control method includes:
determining that the data interface includes M channels according to the channel information, wherein M is a positive integer greater than or equal to two,
obtaining the target data from the data storage module, wherein the target data includes sub-data corresponding to each channel in the M channels, and
performing a data operation according to the sub-data corresponding to each channel in the M channels.

11. The control method according to claim 10, wherein:
the sub-data corresponding to each channel in the M channels is a data index of the to-be-calculated data corresponding to each channel, and a data amount of the data index of the to-be-calculated data is smaller than a data amount of the to-be-calculated data; and
performing the data operation according to the sub-data corresponding to each channel in the M channels includes:
according to the data index of the to-be-calculated data corresponding to each channel in the M channels, determining the to-be-calculated data corresponding to each channel through a pre-stored mapping information between data index and data, and
performing the data operation on the to-be-calculated data corresponding to each channel.

12. The control method according to claim 10, wherein:
the sub-data corresponding to each channel is the to-be-calculated data corresponding to each channel.

13. The control method according to any one of claims 10-12, wherein:
the M channels include a first channel and a second channel, and the operation control module includes a first operation module and a second operation module; and
performing the data operation according to the sub-data corresponding to each channel in the M channels includes:
according to the sub-data corresponding to the first channel, performing a data operation by the first operation module, and
according to the sub-data corresponding to the second channel, performing another data operation by the second operation module.

14. The control method according to any one of claims 10-13, wherein the calculation unit further includes:
a second configuration interface, configured to be connected to an ID configuration bus to receive data ID of the target data; and
an ID storage module, configured to store the data ID of the target data, wherein the operation control module is further configured to perform following operations:
querying the ID storage module to obtain the data ID of the target data, and
when the data ID of the target data is queried, controlling the data interface to receive the target data.

15. The control method according to any one of claims 10-14, wherein:
the target data includes an input feature value and a weight used for a neural networks calculation, and
the operation control module is configured to perform a multiply-accumulate operation on the input feature value and the weight.
